# EUROPEAN PATENT SPECIFICATION

(11) **EP 3 868 208 B1**
(45) Date of publication and mention of the grant of the patent: **15.05.2024**
(21) Application number: 19874758.6
(22) Date of filing: 30.12.2019
(51) Int. Cl.: A01N 59/26, A01N 37/44, A01N 25/00, A01P 9/00

(54) **ENVIRONMENTALLY FRIENDLY MOLLUSCICIDE CONTAINING IRON PHOSPHATE CHELATE AND PREPARATION METHOD THEREFOR**
EISENPHOSPHATCHELATHALTIGES UMWELTFREUNDLICHES MOLLUSKIZID UND HERSTELLUNGSVERFAHREN DAFÜR
MOLLUSCICIDE RESPECTUEUX DE L'ENVIRONNEMENT CONTENANT UN CHÉLATE DE PHOSPHATE DE FER ET SON PROCÉDÉ DE PRÉPARATION

(43) Date of publication of application: 25.08.2021
(73) Proprietor: Xuzhou Yinong Chemicals Co., Ltd, Xuzhou, Jiangsu 221000 (CN)
(72) Inventor: YANG, Kai, Xuzhou, Jiangsu 221000 (CN); YE, Sufen, Xuzhou, Jiangsu 221000 (CN)
(74) Representative: Haseltine Lake Kempner LLP
(86) International application number: PCT/CN2019/129756
(87) International publication number: WO 2021/134157

(56) References cited:
- EP-A1- 2 892 351
- WO-A1-97/26789
- WO-A1-2014/037718
- WO-A2-2007/031565
- WO-A2-2010/084361
- CN-A- 1 290 125
- CN-A- 102 291 988
- CN-A- 102 499 245
- CN-A- 104 798 780
- CN-A- 108 450 481
- CN-A- 108 450 481
- SE-C2- 528 923
- US-A- 5 437 870
- US-A1- 2013 129 804
- EDWARDS C A ET AL: "The relative toxicity of metaldehyde and iron phosphate-based molluscicides to earthworms", CROP PROTECTION, ELSEVIER SCIENCE, GB, vol. 28, no. 4, 1 April 2009 (2009-04-01), pages 289-294, XP025950249, ISSN: 0261-2194, DOI: 10.1016/J.CROPRO.2008.11.009 [retrieved on 2009-02-20]

## Description

### Technical Field

The present disclosure relates to the field of prevention and treatment of molluscas, more particularly, the present disclosure relates to an environment-friendly molluscicide containing a ferric phosphate chelate, a filler and water, wherein the filler comprises distarch phosphate. The invention is also directed to the use of the molluscicide and its preparation method.

### Background

Mollusca which harms crops mainly include Fruticicolidae (commonly called as water snail and snail), *Agriolimax agrestis* Linnaeus, *Cipangopaludina chinensis Gray* (field snail) (commonly called as Margarya melanoide), ampullaria gigas and oncomelania. The generation amount of the mollusca is large. Being hermaphrodite, a snail can lay 300 eggs at one time, and can lay 300~2000 eggs in one year; the ampullaria gigas is gonochoristic, and each female ampullaria gigas can lay 200~500 eggs at one time, each egg can be mature and propagate in 50 days, and the phenomenon of iteration can occur in the field. Snails and field snails, having voracious appetites, bite and eat plumules, tender leaves and tender stems of crops, and can cause a large number of wounds on roots, stems and leaves, so that pathogenic bacteria such as fungi, bacteria and viruses easily invade, causing aggravated degree of harm to the crops. Mollusks are widely distributed in humid and warm regions of the world, and are severely damaging to gardening, grain, fruit, vegetable, cotton, tobacco and like crops. In the above, oncomelanias cause more serious harms, because they are the only intermediate host of schistosome, and are an indispensable link in schistosomiasis propagation.

The Niclosamide, Niclosamide ethanolamine salt, and Metaldehyde are main varieties of the current molluscicides. However, Niclosamide and its ethanolamine salt are highly toxical to aquatic organisms such as fishes, frogs, and shellfishes, and pollute water to extremely easily cause phytotoxicity; due to their relatively strong toxicity and high residue, they are forbidden to be used in vegetables, fruits, and gardening, but are mainly used for killing oncomelanias and preventing and treating ampullaria gigas on rice, thus they have a narrow application range. Meanwhile, in use, dry powder and concentrated solution have stimulation effect on human mucosa, causing symptoms of lacrimation, eye stabbing pain, nasal obstruction, running nose, dry throat, hoarseness and the like. Although having low toxicity to aquatic organisms, Metaldehyde has strong acute toxicity, is harmful to birds and other wild animals. Furthermore, Metaldehyde is insoluble in water, and has poor degradability in soil. At present, there have been reports in the United Kingdom that the residual Metaldehyde in the groundwater body has been found to exceed the standard. Therefore, it is desirable to provide a molluscicide that is safe and low-toxic to humans, aquatic organisms, and wild animals, has relatively good solubility in soil, is readily absorbed by plants, and thus does not accumulate in large quantities in soil to cause soil ecological problems.

The use of ferric phosphate chelates for the control of molluscs is known. US 2013/129804 A1, WO2010/084361 A2 and C. A. Edwards et al in Crop Protection, 2009, 28(4), 289-294 all disclose molluscicide formulations, comprising iron phosphate chelates, but use wheat or barley flour as filler. CN 108450481 A teaches a water-dispersible molluscicide formulation comprising iron phosphate, cornflour and soybean meal, but fails to disclose a chelated iron phosphate or distarch phosphate as the filler.

### Summary

With regard to some problems existing in the prior art, in a first aspect, the present disclosure provides an environment-friendly molluscicide containing a ferric phosphate chelate, of which preparation raw materials (i.e., the raw materials for preparing the environment-friendly molluscicide containing a ferric phosphate chelate) include a ferric phosphate chelate, a filler and water. The filler comprises distarch phosphate. The filler may further include at least one of corn starch, wheat starch, soybean starch, and tapioca starch. Preferably, the filler is distarch phosphate.

In a preferable technical solution of the present disclosure, the preparation raw materials of the environment-friendly molluscicide containing a ferric phosphate chelate further include an adhesive, wherein the adhesive includes at least one of natural wax, chemically modified wax, starch, alginate, agar, lignosulfonate, gum arabic, and modified chitosan, and preferably, the adhesive is modified chitosan.

In a preferable technical solution of the present disclosure, the modified chitosan is citric acid modified chitosan.

In a preferable technical solution of the present disclosure, the preparation raw materials of the environment-friendly molluscicide containing a ferric phosphate chelate further includes a lubricant, wherein the lubricant includes at least one of magnesium stearate, sodium lauryl sulfate, vegetable oil, and hydroxylated vegetable oil, and preferably, the lubricant is hydroxylated vegetable oil.

In a preferable technical solution of the present disclosure, the ferric phosphate chelate is formed by chelating ferric phosphate and a chelating agent; and a weight ratio of the ferric phosphate to the chelating agent is 1:(0.025-40).

In a preferable technical solution of the present disclosure, the weight ratio of the ferric phosphate to the chelating agent is 1:(0.2~5), and preferably 1:(0.8~1.2).

In a preferable technical solution of the present disclosure, the chelating agent includes at least one of glutamic acid diacetic acid and corresponding salts thereof, iminodisuccinic acid and corresponding salts thereof, dicarboxymethyl alanine and corresponding salts thereof, ethylenediamine disuccinic acid and corresponding salts thereof, and methylglycine diacetic acid and corresponding salts thereof.

In a preferable technical solution of the present disclosure, a weight ratio of the citric acid modified chitosan to the hydroxylated vegetable oil is (0.2~5):1, and preferably (0.2~1.5):1.

In a second aspect, the present disclosure provides a method for preparing the environment-friendly molluscicide containing a ferric phosphate chelate, which includes: placing preparation raw materials of the environment-friendly molluscicide containing a ferric phosphate chelate into a disc granulator to produce granules, and drying the granules to obtain the environment-friendly molluscicide containing a ferric phosphate chelate.

In a third aspect, the present disclosure provides use of the environment-friendly molluscicide containing a ferric phosphate chelate in terrestrial environment and aquatic environment.

Compared with the prior art, the present disclosure has following beneficial effects:
the molluscicide provided in the present disclosure is harmless to human beings and aquatic organisms, is harmless to pets and wild animals, and can improve the solubility of the ferric phosphate in soil to enable the ferric phosphate to be absorbed by crops as a phosphate fertilizer, thereby not only solving the problem of degradation residue of the ferric phosphate in soil, but also providing nutrients to the crops, and ensuring the harmlessness and safety of the molluscicide to the ecological environment.

### Detailed Description of Embodiments

The present disclosure is illustrated below by way of specific embodiments, but is not limited to the specific embodiments given below.

In a first aspect, the present disclosure provides an environment-friendly molluscicide containing a ferric phosphate chelate, wherein preparation raw materials thereof include a ferric phosphate chelate, a filler and water, wherein the filler comprises distarch phosphate.

In an embodiment, the preparation raw materials of the environment-friendly molluscicide containing a ferric phosphate chelate further include an adhesive.

In an embodiment, the preparation raw materials of the environment-friendly molluscicide containing a ferric phosphate chelate further include a lubricant.

In an embodiment, the preparation raw materials of the environment-friendly molluscicide containing a ferric phosphate chelate further include a pigment.

In a preferable embodiment, the preparation raw materials of the environment-friendly molluscicide containing a ferric phosphate chelate include, in parts by weight, 1~80 parts of the ferric phosphate chelate, 10~85 parts of the filler, 1~5 parts of the adhesive, 1~5 parts of the lubricant, and 5~35 parts of water.

In a preferable embodiment, the preparation raw materials of the environment-friendly molluscicide containing a ferric phosphate chelate include, in parts by weight, 5~15 parts of the ferric phosphate chelate, 60~80 parts of the filler, 1~5 parts of the adhesive, 1~5 parts of the lubricant, 0.1∼1 part of the pigment, and 5~35 parts of water.

In a more preferable embodiment, the preparation raw materials of the environment-friendly molluscicide containing a ferric phosphate chelate include, in parts by weight, 10 parts of the ferric phosphate chelate, 70 parts of the filler, 1~5 parts of the adhesive, 1~5 parts of the lubricant, 0.5 parts of the pigment, and 5~35 parts of water.

### Ferric Phosphate Chelate

The ferric phosphate chelate is a formation resulted from chelation of ferric phosphate and a chelating agent.

In an embodiment, a weight ratio of the ferric phosphate to the chelating agent is 1:(0.025~40); preferably, the weight ratio of the ferric phosphate to the chelating agent is 1:(0.2~5); further preferably, the weight ratio of the ferric phosphate to the chelating agent is 1:(0.8~1.2); more preferably, the weight ratio of the ferric phosphate to the chelating agent is 1:1.

In an embodiment, the chelating agent includes at least one of glutamic acid diacetic acid and corresponding salts thereof, iminodisuccinic acid and corresponding salts thereof, dicarboxymethyl alanine and corresponding salts thereof, ethylenediamine disuccinic acid and corresponding salts thereof, and methylglycine diacetic acid and corresponding salts thereof.

Preferably, the chelating agent includes at least one of tetrasodium glutamic acid diacetate, tetrapotassium glutamic acid diacetate, tetrasodium iminodisuccinate, tetrapotassium iminodisuccinate, trisodium dicarboxymethyl alaninate, tripotassium dicarboxymethyl alaninate, trisodium ethylenediamine disuccinate, tripotassium ethylenediamine disuccinate, trisodium methylglycine diacetate, and tripotassium methylglycine diacetate.

More preferably, the chelating agent includes tetrasodium glutamic acid diacetate, CAS: 51981-21-6.

### Filler

The filler, also named as filling, additive and filling substance, is a class of solid substances which can be added into materials to improve the performance of the materials or to increase the volume and weight, and reduce the cost of the materials. Common industrial fillers include kaolin, diatomaceous earth, talcum powder, graphite, carbon black, alumina powder, glass powder, asbestos powder, mica powder, quartz powder, carbon fiber, dust cork, carborundum and the like. A large amount of various fillers are used in products such as plastic processing, rubber processing, paper, paints, pesticides, and medicines in chemical production, not only improving performances of these products, but also greatly reducing production costs.

The filler comprises distarch phosphate. In an embodiment, the filler also includes at least one of corn starch, wheat starch, soybean starch, and tapioca starch.

Preferably, the filler is distarch phosphate.

The applicant unexpectedly found that concurrent use of the distarch phosphate and the adhesive can achieve a synergistic effect, such that the adhesive can more easily damage the cutan of the occluded phosphorus surface, and thus the residual rate in soil is reduced. The applicant believes that a possible reason is that distarch phosphate absorbs water, and phosphate charges repel each other, so that molecular chains of the adhesive tend to disperse, which promotes the adhesive to damage the cutan of the occluded phosphorus surface.

The distarch phosphate of the present disclosure is purchased from Suzhou Gaofeng Starch Technology Co., Ltd.

### Adhesive

The adhesive is one of the most important auxiliary materials, and is used extremely widely in packaging operations. The adhesive is a substance having adhesive property, and with the aid of its adhesive property, two separate materials can be joined together.

In an embodiment, the adhesive includes at least one of natural wax, chemically modified wax, starch, alginate, agar, lignosulfonate, gum Arabic, and modified chitosan; preferably, the modified chitosan is citric acid modified chitosan.

In an embodiment, the adhesive includes citric acid modified chitosan.

In an embodiment, a method for preparing the citric acid modified chitosan includes: mixing citric acid and sodium hypophosphite at a molar ratio of (5~10):1, adding distilled water for dissolving, then adding chitosan, reacting at 100~110 °C for 2.5~3 h, and after the reaction is finished, precipitating with ethanol, washing, suction filtering, drying, and grinding to obtain the citric acid modified chitosan.

Preferably, a weight ratio of the chitosan to the citric acid is 1:(2~4).

The chitosan is purchased from Nanjing Songguan Biotechnology Co., Ltd., CAS: 9012-76-4.

In a preferred embodiment, a method for preparing the citric acid modified chitosan includes: placing the citric acid and the sodium hypophosphite into a three-neck flask at a molar ratio of 8:1, adding a sufficient amount of distilled water to completely dissolve the citric acid and the sodium hypophosphite and then shaking up, following by weighing chitosan and adding it into the three-neck flask, wherein a weight ratio of the chitosan to the citric acid is 1:3, reacting at 105 °C for 3 h, after the reaction is finished, precipitating with ethanol, washing and suction filtering, freezing and drying in vacuum at -55 °C for 36 h, and finally grinding and crushing to obtain powdery citric acid modified chitosan.

The applicant found that when the specific adhesive, citric acid modified chitosan, was selected, the adhesive effect of the adhesive could be improved, the molluscicidal effect of the molluscicide can be improved, and the residual rate of phosphate in soil can be quickly reduced. The applicant believes that a possible reason is that the citric acid modified chitosan leads to suitable adhesive effect, so that it will not cause the situation that the molluscicide cannot form particles due to too poor adhesive effect, and that the molluscicide becomes agglomerated due to too strong adhesive effect, which reduces the attraction of the molluscicide to snails; the citric acid modified chitosan has relatively high adsorption activity to the cutan on the occluded phosphorus surface, and meanwhile, the specific structure of the chitosan enables the citric acid modified chitosan to be capable of being adsorbed on the cutan surface to the maximum extent, which facilitates damaging the cutan on the occluded phosphorus surface, and promotes the degradation of residual phosphate in soil, and meanwhile, the hydroscopicity of the citric acid modified chitosan reduces the oxidation-reduction potential of the cutan, and promotes the reduction of the cutan of the occluded phosphorus surface, such that the released metal ions play a role, the molluscicidal effect of the molluscicide is enhanced, and the residual rate of ferric phosphate in soil is reduced.

### Lubricant

A reagent for lubricating and reducing frictional resistance is called as a lubricant.

In an embodiment, the lubricant includes at least one of magnesium stearate, sodium lauryl sulfate, vegetable oil, and hydroxylated vegetable oil; preferably, the lubricant includes hydroxylated vegetable oil.

The vegetable oil, a compound obtained by compounding unsaturated fatty acid and glycerin, is widely distributed in nature, and is lipid obtained from fruits, seeds, and germs of plants, such as peanut oil, soybean oil, linseed oil, castor oil, and rapeseed oil. Main components of vegetable oil is ester generated from straight chain higher fatty acid and glycerine, and the fatty acid contains a plurality of unsaturated acids, such as erucic acid, eleostearic acid, and ricinoleic acid, in addition to palmitic acid, stearic acid and oleic acid. The vegetable oil mainly contains vitamin E, calcium, iron, phosphorus, potassium and other minerals, fatty acid, etc. The fatty acid in the vegetable oil can moisten and luster skin.

The hydroxylated vegetable oil refers to vegetable oil that has been modified with hydroxyl.

In an embodiment, the hydroxylated vegetable oil includes at least one of hydroxylated soybean oil, hydroxylated castor oil, and hydroxylated peanut oil; preferably, the hydroxylated vegetable oil includes hydroxylated soybean oil.

In an embodiment, a method for preparing the hydroxylated soybean oil includes following steps:
(1) adding soybean oil and maleic anhydride into a four-neck flask, heating the four-neck flask to 190~210 °C, and reacting for 2~3 h to obtain an intermediate, maleic anhydride modified soybean oil;
(2) adding the maleic anhydride modified soybean oil, diglycol and KOH into a four-neck flask, heating the four-neck flask to 190~220 °C, and reacting for 5~6 h to obtain crude hydroxylated soybean oil;
(3) adding the crude hydroxylated soybean oil into a four-neck flask, and removing unreacted diglycol through multiple times of water washing and liquid separation; adding 3 wt% of water and phosphoric acid at mass concentration of 98% to neutralize the KOH, adding 0.3 wt% of magnesium silicate adsorbent, distilling under a reduced pressure to remove water, and removing the adsorbent and potassium salt by suction filtration.

Preferably, the maleic anhydride accounts for 0.25~0.4 wt% of the soybean oil; more preferably, the maleic anhydride accounts for 0.34 wt% of the soybean oil.

Preferably, a weight ratio of the diglycol to the soybean oil is (1~1.5):1; more preferably, the weight ratio of the diglycol to the soybean oil is 1:1.

Preferably, the KOH accounts for 0.04~0.09 wt% of the maleic anhydride modified soybean oil; more preferably, the KOH accounts for 0.06 wt% of the maleic anhydride modified soybean oil.

The soybean oil is purchased from Chongqing Saipunasi Technologies, Inc., CAS: 8001-22-7.

In a preferred embodiment, a method for preparing the hydroxylated soybean oil includes following steps:
(1) adding soybean oil and maleic anhydride into a four-neck flask, placing the four-neck flask in a heating jacket, installing a stirring device, providing condensate water, a thermometer and nitrogen protection, then starting to provide the nitrogen protection, condensate water and stirring, heating the heating jacket to 210 °C, and reacting for 3 h to obtain an intermediate, maleic anhydride modified soybean oil;
(2) adding the maleic anhydride modified soybean oil, diglycol and KOH into a four-neck flask, placing the mixture into the heating jacket, and installing a stirring device, providing condensate water, a thermometer and nitrogen protection, wherein the condensate water should be horizontally provided so as to discharge water generated in the reaction process, starting to provide the nitrogen protection, condensate water and stirring, heating the heating jacket to 220 °C, and reacting for 6 h to obtain crude hydroxylated soybean oil; and
(3) adding the crude hydroxylated soybean oil into a four-neck flask, and removing unreacted diglycol through multiple times of water washing and liquid separation; adding 3 wt% of water, and phosphoric acid at mass concentration of 98w% to neutralize the KOH, adding 0.3 wt% of magnesium silicate adsorbent, distilling under a reduced pressure to remove water, and removing the adsorbent and potassium salt by suction filtration.

In experiments, the applicant found that by selecting a specific lubricant, the molluscicidal effect can be further improved and the residual rate of phosphate in soil can be reduced. Using the hydroxylated soybean oil can have higher molluscicidal effect in a short period, and the applicant believes that a possible reason is that the relatively long carbon chains in the hydroxylated soybean oil can function to coat phosphate to a certain degree to reduce the probability of formation of phosphate in occluded state, and meanwhile the hydroxylated soybean oil can perform multidirectional chelation on iron ions, so as to improve the molluscicidal effect and reduce the residual rate of the phosphate in soil, and on the other hand, the hydroxylated soybean oil enables the filler in the molluscicide to be more uniformly dispersed in the molluscicide, and further can alleviate the anorexia of the snails caused by the sour taste brought by the citric acid modified chitosan, and thus increase the attraction of the molluscicide to the snails.

In an embodiment, a weight ratio of the citric acid modified chitosan to the hydroxylated soybean oil is (0.2~5):1; preferably, the weight ratio of the citric acid modified chitosan to the hydroxylated soybean oil is (0.2~1.5):1; more preferably, the weight ratio of the citric acid modified chitosan to the hydroxylated soybean oil is 1:1.

Although the presence of the citric acid modified chitosan and the hydroxylated soybean oil can improve the molluscicidal effect to some extent, the applicant found that concurrent use of the citric acid modified chitosan and the hydroxylated soybean oil provides much higher effect than when used alone. Meanwhile, the applicant found that when the citric acid modified chitosan and the hydroxylated soybean oil are used simultaneously, the weight ratio therebetween needs to be strictly controlled, and when the weight ratio of the citric acid modified chitosan to the hydroxylated soybean oil is (0.2~5):1, the effect is the best, and the applicant conjectures that a possible reason is that the citric acid modified chitosan and the hydroxylated soybean oil have a certain synergistic effect at a specific weight ratio, and while the hydroxylated soybean oil is coated on the surface of the ferric phosphate salt, an action force between the citric acid modified chitosan and the hydroxylated soybean oil enables the citric acid modified chitosan to rapidly break the formed cutan on the occluded phosphorus surface; meanwhile, the presence of the hydroxylated vegetable oil and the citric acid modified chitosan will promote the chelation of tetrasodium glutamic acid diacetate with iron ions, and the chelating sites with the iron ions have different strengths, such that the iron ions chelate with tetrasodium glutamic acid diacetate continuously and slowly, preventing nonuniform distribution of the chelated iron ions, hindering the molecular movement of the iron ions, which will reduce the chelation rate, and thus affect the molluscicidal effect and the residual rate of phosphate in soil. When the content of the citric acid modified chitosan is too high, the excessive citric acid modified chitosan causes excessive anions in the pesticide, and electrostatic repulsion causes that the citric acid modified chitosan and the hydroxylated soybean oil cannot be well and uniformly combined together, so that defects exist when the cutan on the occluded phosphorus surface is damaged, which affects the insecticidal effect and the residual rate of phosphate in soil.

### Pigment

The pigment is a raw material that imparts a certain color. People often select commodities according to senses such as visual sense, tactile sense, and sense of smell, and the pigment is an important part in the aspect of visual sense, therefore, whether a pigment is properly used or not also plays a decisive role in the quality of products. (1) Synthetic pigment: the pigment prepared by chemical synthesis is called as synthetic pigment. (2) Inorganic pigment: common inorganic pigments are iron oxide, carbon black, chromium oxide green, etc., which have good light resistance and insolubility in water. (3) Natural pigment: common natural pigments include annatto, cochineal, chlorophyll, curcumin, carotene and so on.

In an embodiment, the pigment is one or a combination of more selected from the group consisting of citrus yellow, curcumin, grape skin red, mulberry red, corn yellow, roselle red, gardenia yellow, cochineal, rosa laevigate michx brown, and coreopsis yellow extract.

In a second aspect, the present disclosure provides a method for preparing an environment-friendly molluscicide containing a ferric phosphate chelate, which includes: placing preparation raw materials of the environment-friendly molluscicide containing a ferric phosphate chelate into a disc granulator to produce granules, and drying the granules to obtain the environment-friendly molluscicide containing a ferric phosphate chelate.

In a third aspect, the present disclosure provides use of an environment-friendly molluscicide containing a ferric phosphate chelate in terrestrial environment and aquatic environment.

### Examples

Hereinafter, the present disclosure is described in more detail by way of examples, but it should be understood that these examples are merely illustrative and not restrictive. Raw materials used in the following examples are all commercially available unless otherwise stated.

### Example 1 (not claimed)

Example 1 of the present disclosure provides an environment-friendly molluscicide containing a ferric phosphate chelate, of which preparation raw materials include, in parts by weight, 5 parts of a ferric phosphate chelate, 60 parts of a filler, 1 part of an adhesive, 5 parts of a lubricant, 0.1 parts of a pigment, and 29 parts of water.

The ferric phosphate chelate is formed by chelating ferric phosphate and a chelating agent; the chelating agent is tetrasodium glutamic acid diacetate; a weight ratio of the ferric phosphate to the chelating agent is 1:0.2; the filler is wheat starch; the adhesive is citric acid modified chitosan; the lubricant is hydroxylated soybean oil; the pigment is chamomile yellow.

A method for preparing the citric acid modified chitosan includes: placing the citric acid and the sodium hypophosphite into a three-neck flask at a molar ratio of 8:1, adding a sufficient amount of distilled water to completely dissolve the citric acid and the sodium hypophosphite and then shaking up, then weighing chitosan and adding it into the three-neck flask, wherein a weight ratio of the chitosan to the citric acid is 1:3, reacting at 105 °C for 3 h, after the reaction is finished, precipitating with ethanol, washing and suction filtering, freezing and drying in vacuum at -55 °C for 36 h, and finally grinding and crushing to obtain powdery citric acid modified chitosan.

The chitosan is purchased from Nanjing Songguan Biotechnology Co., Ltd.

A method for preparing the hydroxylated soybean oil includes following steps:
(1) adding soybean oil and maleic anhydride into a four-neck flask, placing the four-neck flask in a heating jacket, installing a stirring device, providing condensate water, a thermometer and nitrogen protection, then starting to provide the nitrogen protection, condensate water and stirring, heating the heating jacket to 210 °C, and reacting for 3 h to obtain an intermediate, maleic anhydride modified soybean oil;
(2) adding the maleic anhydride modified soybean oil, diglycol and KOH into a four-neck flask, placing the mixture into the heating jacket, and installing a stirring device, providing condensate water, a thermometer and nitrogen protection, wherein the condensate water should be horizontally provided so as to discharge water generated in the reaction process, starting to provide the nitrogen protection, condensate water and stirring, heating the heating jacket to 220 °C, and reacting for 6 h to obtain crude hydroxylated soybean oil; and
(3) adding the crude hydroxylated soybean oil into a four-neck flask, and removing unreacted diglycol through multiple times of water washing and liquid separation; adding 3 wt% of water, and phosphoric acid at mass concentration of 98w% to neutralize the KOH, adding 0.3 wt% of magnesium silicate adsorbent, distilling under a reduced pressure to remove water, and removing the adsorbent and potassium salt by suction filtration.

The maleic anhydride accounts for 0.34 wt% of the soybean oil; a weight ratio of the diglycol to the soybean oil is 1:1; the KOH accounts for 0.06 wt% of the maleic anhydride modified soybean oil.

The soybean oil is purchased from Chongqing Saipunasi Technologies, Inc.

The method for preparing the environment-friendly molluscicide containing a ferric phosphate chelate includes: mixing well a ferric phosphate chelate, a filler, an adhesive, a lubricant, a pigment, and water, placing the mixture into a disc granulator to produce granules, and drying the granules to obtain the environment-friendly molluscicide containing a ferric phosphate chelate.

### Example 2 (not claimed)

Example 2 of the present disclosure provides an environment-friendly molluscicide containing a ferric phosphate chelate, of which preparation raw materials include, in parts by weight, 15 parts of a ferric phosphate chelate, 70 parts of a filler, 3 parts of an adhesive, 2 parts of a lubricant, 0.8 parts of a pigment, and 10 parts of water.

The ferric phosphate chelate is formed by chelating ferric phosphate and a chelating agent; the chelating agent is tetrasodium glutamic acid diacetate; a weight ratio of the ferric phosphate to the chelating agent is 1:5; the filler is wheat starch; the adhesive is citric acid modified chitosan; the lubricant is hydroxylated soybean oil; the pigment is chamomile yellow.

A method for preparing the citric acid modified chitosan includes: placing the citric acid and the sodium hypophosphite into a three-neck flask at a molar ratio of 8:1, adding a sufficient amount of distilled water to completely dissolve the citric acid and the sodium hypophosphite and then shaking up, then weighing chitosan and adding it into the three-neck flask, wherein a weight ratio of the chitosan to the citric acid is 1:3, reacting at 105 °C for 3 h, after the reaction is finished, precipitating with ethanol, washing and suction filtering, freezing and drying in vacuum at -55 °C for 36 h, and finally grinding and crushing to obtain powdery citric acid modified chitosan.

The chitosan is purchased from Nanjing Songguan Biotechnology Co., Ltd.

A method for preparing the hydroxylated soybean oil includes following steps:
(1) adding soybean oil and maleic anhydride into a four-neck flask, placing the four-neck flask in a heating jacket, installing a stirring device, providing condensate water, a thermometer and nitrogen protection, then starting to provide the nitrogen protection, condensate water and stirring, heating the heating jacket to 210 °C, and reacting for 3 h to obtain an intermediate, maleic anhydride modified soybean oil;
(2) adding the maleic anhydride modified soybean oil, diglycol and KOH into a four-neck flask, placing the mixture into the heating jacket, and installing a stirring device, providing condensate water, a thermometer and nitrogen protection, wherein the condensate water should be horizontally provided so as to discharge water generated in the reaction process, starting to provide the nitrogen protection, condensate water and stirring, heating the heating jacket to 220 °C, and reacting for 6 h to obtain crude hydroxylated soybean oil; and
(3) adding the crude hydroxylated soybean oil into a four-neck flask, and removing unreacted diglycol through multiple times of water washing and liquid separation; adding 3 wt% of water, and phosphoric acid at mass concentration of 98w% to neutralize the KOH, adding 0.3 wt% of magnesium silicate adsorbent, distilling under a reduced pressure to remove water, and removing the adsorbent and potassium salt by suction filtration.

The maleic anhydride accounts for 0.34 wt% of the soybean oil; a weight ratio of the diglycol to the soybean oil is 1:1; the KOH accounts for 0.06 wt% of the maleic anhydride modified soybean oil.

The soybean oil is purchased from Chongqing Saipunasi Technologies, Inc.

The method for preparing the environment-friendly molluscicide containing a ferric phosphate chelate includes: mixing well a ferric phosphate chelate, a filler, an adhesive, a lubricant, a pigment, and water, placing the mixture into a disc granulator to produce granules, and drying the granules to obtain particles of the environment-friendly molluscicide containing a ferric phosphate chelate.

### Example 3

Example 3 of the present disclosure provides an environment-friendly molluscicide containing a ferric phosphate chelate, of which preparation raw materials include, in parts by weight, 10 parts of a ferric phosphate chelate, 70 parts of a filler, 3 parts of an adhesive, 3 parts of a lubricant, 0.5 parts of a pigment, and 14 parts of water.

The ferric phosphate chelate is formed by chelating ferric phosphate and a chelating agent; the chelating agent is tetrasodium glutamic acid diacetate; a weight ratio of the ferric phosphate to the chelating agent is 1:1; the filler is distarch phosphate; the adhesive is citric acid modified chitosan; the lubricant is hydroxylated soybean oil; the pigment is chamomile yellow.

A method for preparing the citric acid modified chitosan includes: placing the citric acid and the sodium hypophosphite into a three-neck flask at a molar ratio of 8:1, adding a sufficient amount of distilled water to completely dissolve the citric acid and the sodium hypophosphite and then shaking up, then weighing chitosan and adding it into the three-neck flask, wherein a weight ratio of the chitosan to the citric acid is 1:3, reacting at 105 °C for 3 h, after the reaction is finished, precipitating with ethanol, washing and suction filtering, freezing and drying in vacuum at -55 °C for 36 h, and finally grinding and crushing to obtain powdery citric acid modified chitosan.

The chitosan is purchased from Nanjing Songguan Biotechnology Co., Ltd.

A method for preparing the hydroxylated soybean oil includes following steps:
(1) adding soybean oil and maleic anhydride into a four-neck flask, placing the four-neck flask in a heating jacket, installing a stirring device, providing condensate water, a thermometer and nitrogen protection, then starting to provide the nitrogen protection, condensate water and stirring, heating the heating jacket to 210 °C, and reacting for 3 h to obtain an intermediate, maleic anhydride modified soybean oil;
(2) adding the maleic anhydride modified soybean oil, diglycol and KOH into a four-neck flask, placing the mixture into the heating jacket, and installing a stirring device, providing condensate water, a thermometer and nitrogen protection, wherein the condensate water should be horizontally provided so as to discharge water generated in the reaction process, starting to provide the nitrogen protection, condensate water and stirring, heating the heating jacket to 220 °C, and reacting for 6 h to obtain crude hydroxylated soybean oil; and
(3) adding the crude hydroxylated soybean oil into a four-neck flask, and removing unreacted diglycol through multiple times of water washing and liquid separation; adding 3 wt% of water, and phosphoric acid at mass concentration of 98w% to neutralize the KOH, adding 0.3 wt% of magnesium silicate adsorbent, distilling under a reduced pressure to remove water, and removing the adsorbent and potassium salt by suction filtration.

The maleic anhydride accounts for 0.34 wt% of the soybean oil; a weight ratio of the diglycol to the soybean oil is 1:1; the KOH accounts for 0.06 wt% of the maleic anhydride modified soybean oil.

The soybean oil is purchased from Chongqing Saipunasi Technologies, Inc.

The method for preparing the environment-friendly molluscicide containing a ferric phosphate chelate includes: mixing well a ferric phosphate chelate, a filler, an adhesive, a lubricant, a pigment, and water, placing the mixture into a disc granulator to produce granules, and drying the granules to obtain the environment-friendly molluscicide containing a ferric phosphate chelate.

### Example 4 (not claimed)

Example 4 of the present disclosure provides an environment-friendly molluscicide containing a ferric phosphate chelate, of which preparation raw materials include, in parts by weight, 1 part of a ferric phosphate chelate, 60 parts of a filler, 1 part of an adhesive, 5 parts of a lubricant, 0.1 parts of a pigment, and 33 parts of water.

The ferric phosphate chelate is formed by chelating ferric phosphate and a chelating agent; the chelating agent is tetrasodium glutamic acid diacetate; a weight ratio of the ferric phosphate to the chelating agent is 1:0.025; the filler is wheat starch; the adhesive is modified chitosan; the modified chitosan is citric acid modified chitosan; the lubricant is hydroxylated soybean oil; the pigment is chamomile yellow.

A specific implementation mode of the method for preparing the citric acid modified chitosan is the same as that of Example 3.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 5

Example 5 of the present disclosure provides an environment-friendly molluscicide containing a ferric phosphate chelate, of which preparation raw materials include, in parts by weight, 80 parts of a ferric phosphate chelate, 10 parts of a filler, 3 parts of an adhesive, 2 parts of a lubricant, 0.8 parts of a pigment, and 5 parts of water.

The ferric phosphate chelate is formed by chelating ferric phosphate and a chelating agent; the chelating agent is tetrasodium glutamic acid diacetate; a weight ratio of the ferric phosphate to the chelating agent is 1:40; the filler is distarch phosphate; the adhesive is modified chitosan; the modified chitosan is citric acid modified chitosan; the lubricant is hydroxylated soybean oil; the pigment is chamomile yellow.

A specific implementation mode of the method for preparing the citric acid modified chitosan is the same as that of Example 3.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 6

Example 6 of the present disclosure provides an environment-friendly molluscicide containing a ferric phosphate chelate, of which a specific implementation mode is the same as that of Example 3, while the difference lies in that the adhesive is chitosan.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 7

Example 7 of the present disclosure provides an environment-friendly molluscicide containing a ferric phosphate chelate, of which a specific implementation mode is the same as that of Example 3, while the difference lies in that the citric acid modified chitosan is replaced with malic acid modified chitosan.

A method for preparing the malic acid modified chitosan includes: placing malic acid and sodium hypophosphite into a three-neck flask at a molar ratio of 8:1, adding a sufficient amount of distilled water to completely dissolve the malic acid and the sodium hypophosphite and then shaking up, then weighing chitosan and adding it into the three-neck flask, wherein a weight ratio of the chitosan to the malic acid is 1:3, reacting at 105 °C for 3 h, after the reaction is finished, precipitating with ethanol, washing and suction filtering, freezing and drying in vacuum at -55 °C for 36 h, and finally grinding and crushing to obtain powdery malic acid modified chitosan.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 8

Example 8 of the present disclosure provides an environment-friendly molluscicide containing a ferric phosphate chelate, of which a specific implementation mode is the same as that of Example 3.

A specific implementation mode of the method for preparing the citric acid modified chitosan is the same as that of Example 3, while the difference lies in that a weight ratio of the chitosan to the citric acid is 1:1.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 9

Example 9 of the present disclosure provides an environment-friendly molluscicide containing a ferric phosphate chelate, of which a specific implementation mode is the same as that of Example 3, while the difference lies in that the lubricant is soybean oil.

A specific implementation mode of the method for preparing the citric acid modified chitosan is the same as that of Example 3.

A specific implementation mode of the method for preparing the environment-friendly molluscicide containing a ferric phosphate chelate is the same as that of Example 3.

### Example 10

Example 10 of the present disclosure provides an environment-friendly molluscicide containing a ferric phosphate chelate, of which preparation raw materials include, in parts by weight, 10 parts of a ferric phosphate chelate, 70 parts of a filler, 18 parts of an adhesive, 3 parts of a lubricant, 0.5 parts of a pigment, and 14 parts of water.

A specific implementation mode of the method for preparing the citric acid modified chitosan is the same as that of Example 3.

A specific implementation mode of the method for preparing the hydroxylated soybean oil is the same as that of Example 3.

A specific implementation mode of the method for preparing the environment-friendly molluscicide containing a ferric phosphate chelate is the same as that of Example 3.

### Example 11

Example 11 of the present disclosure provides an environment-friendly molluscicide containing a ferric phosphate chelate, of which a specific implementation mode is the same as that of Example 3, while the difference lies in that the preparation raw materials of the environment-friendly molluscicide containing a ferric phosphate chelate do not include an adhesive.

A specific implementation mode of the method for preparing the hydroxylated soybean oil is the same as that of Example 3.

The method for preparing the environment-friendly molluscicide containing a ferric phosphate chelate includes: mixing well a ferric phosphate chelate, a filler, a lubricant, a pigment, and water, placing the mixture into a disc granulator to produce granules, and drying the granules to obtain the environment-friendly molluscicide containing a ferric phosphate chelate.

### Example 12

Example 12 of the present disclosure provides an environment-friendly molluscicide containing a ferric phosphate chelate, of which a specific implementation mode is the same as that of Example 3, while the difference lies in that the preparation raw materials of the environment-friendly molluscicide containing a ferric phosphate chelate do not include a lubricant.

A specific implementation mode of the method for preparing the citric acid modified chitosan is the same as that of Example 3.

A method for preparing the environment-friendly molluscicide containing a ferric phosphate chelate includes: mixing well a ferric phosphate chelate, a filler, an adhesive, a pigment, and water, placing the mixture into a disc granulator to produce granules, and drying the granules to obtain the environment-friendly molluscicide containing a ferric phosphate chelate.

### Performance Evaluation

1. The insect prevention effects and safety of the molluscicide to crops were tested: the insect prevention effects of the environment-friendly molluscicides obtained in Examples 1~12 and the safety of the environment-friendly molluscicides obtained in Examples 1~5 to crops were tested according to the GB/T17980.69-2004 standard, with a use dosage of 3333.5 g/mu; the control efficiencies on day 3, day 7, day 14 and day 21 were recorded in the insect prevention effect test.
2. Test of residue of the ferric phosphate chelate in soil: after the environment-friendly molluscicides obtained in Examples 1~12 were applied, residual quantities of the ferric phosphate chelate in the molluscicides in soil were tested;
   Experimental conditions: experimental crops were cabbages; the soil was sandy loam with an area of 20 square meters;

Implementation method: 1. taking 1 g of soil sample per 4 square meters, mixing the soil samples, and determining a soil initial sample; 2. uniformly spreading 200 g of the environment-friendly molluscicide containing a ferric phosphate chelate per square meter; 3. taking 1 g of the soil sample per 4 square meters after 21 days, mixing the soil samples and determining a final sample; 4. measuring iron contents in the soil initial sample and the final sample by an atomic absorption method.
3. Safety Test on a applicator: when the environment-friendly molluscicides obtained in Examples 1~5 were applied, whether the molluscicides influenced the applicator or not was recorded; when applying the molluscicides, if the applicator did not feel physically discomfortable, and if no erythema or redness appeared on the skin, it indicated that the molluscicides had no influence on the applicator.

**Table 1**

| | Control Efficiency (%) | | | | Safety Test on Applicator | Safety Test on Crops | Residual iron Content in Soil (*10⁴ mq/kq) | |
|---|---|---|---|---|---|---|---|---|
| | Day 3 | Day 7 | Day 14 | Day 21 | | | Soil Initial Sample | Soil Final Sample |
| Example 1* | 41.88 | 52.62 | 78.62 | 87.67 | No influence | No Phytotoxicity | 2.1 | 2.1 |
| Example 2* | 44.52 | 52.12 | 79.62 | 90.86 | No Influence | No Phytotoxicity | 2.1 | 2.1 |
| Example 3 | 44.61 | 55.70 | 81.70 | 91.98 | No Influence | No Phytotoxicity | 2.1 | 2.1 |
| Example 4 | 40.72 | 51.89 | 77.00 | 86.42 | No Influence | No Phytotoxicity | 2.1 | 2.1 |
| Example 5 | 44.21 | 56.30 | 80.65 | 91.44 | No Influence | No | 2.1 | 2.1 |
| Example 6 | 38.56 | 48.9 | 70.21 | 77.42 | / | Phytotoxicity / | 2.1 | 4.0 |
| Example 7 | 38.94 | 49.10 | 71.60 | 79.35 | / | / | 2.1 | 3.1 |
| Example 8 | 35.25 | 46.72 | 68.60 | 73.56 | / | / | 2.1 | 4.6 |
| Example 9 | 36.73 | 49.50 | 73.61 | 81.83 | / | / | 2.1 | 2.6 |
| Example 10 | 39.94 | 50.10 | 71.60 | 79.35 | / | / | 2.1 | 2.4 |
| Example 11 | 32.41 | 41.20 | 62.20 | 68.85 | / | / | 2.1 | 6.1 |
| Example 12 | 30.58 | 43.52 | 67.21 | 72.95 | / | / | 2.1 | 5.1 |

| | | | | | | | | |
|---|---|---|---|---|---|---|---|---|
| * Example not claimed | | | | | | | | |

From the performance test results in Table 1, it can be seen that the environment-friendly molluscicide containing a ferric phosphate chelate provided in the present disclosure has very good molluscicide effect in a short period, and meanwhile has no phytotoxicity on crops, and no influence on the applicator, without residue of ferric phosphate in soil, meeting the requirements of green development.

The foregoing examples are merely illustrative, and serve to explain some features of the method of the present disclosure. The appended claims are intended to claim as broad a scope as can be conceived, and the examples presented herein are merely illustrative of selected embodiments in accordance with all possible combinations of examples. Accordingly, it is applicant's intention that the appended claims are not to be limited by the choice of examples illustrating features of the present disclosure.

## Claims

1. An environment-friendly molluscicide containing a ferric phosphate chelate, **characterized in that** raw materials for preparing the environment-friendly molluscicide comprise a ferric phosphate chelate, a filler and water, wherein the filler comprises distarch phosphate.

2. The environment-friendly molluscicide containing a ferric phosphate chelate according to claim 1, **characterized in that** the raw materials for preparing the environment-friendly molluscicide containing a ferric phosphate chelate further comprise an adhesive, wherein the adhesive comprises at least one selected from the group consisting of natural wax, chemically modified wax, starch, alginate, agar, lignosulfonate, gum arabic and modified chitosan, and preferably, the adhesive is the modified chitosan.

3. The environment-friendly molluscicide containing a ferric phosphate chelate according to claim 2, **characterized in that** the modified chitosan is citric acid modified chitosan.

4. The environment-friendly molluscicide containing a ferric phosphate chelate according to claim 1, **characterized in that** the raw materials for preparing the environment-friendly molluscicide containing a ferric phosphate chelate further comprise a lubricant, wherein the lubricant comprises at least one selected from the group consisting of magnesium stearate, sodium lauryl sulfate, vegetable oil and hydroxylated vegetable oil, and preferably, the lubricant is the hydroxylated vegetable oil.

5. The environment-friendly molluscicide containing a ferric phosphate chelate according to any one of claims 1~4, **characterized in that** the ferric phosphate chelate is formed by chelating ferric phosphate and a chelating agent; and a weight ratio of the ferric phosphate to the chelating agent is 1:(0.025-40).

6. The environment-friendly molluscicide containing a ferric phosphate chelate according to claim 5, **characterized in that** the weight ratio of the ferric phosphate to the chelating agent is 1:(0.2~5), and preferably 1:(0.8~1.2).

7. The environment-friendly molluscicide containing a ferric phosphate chelate according to claim 5, **characterized in that** the chelating agent comprises at least one selected from the group consisting of glutamic acid diacetic acid and corresponding salts thereof, iminodisuccinic acid and corresponding salts thereof, dicarboxymethyl alanine and corresponding salts thereof, ethylenediamine disuccinic acid and corresponding salts thereof and methylglycine diacetic acid and corresponding salts thereof.

8. The environment-friendly molluscicide containing a ferric phosphate chelate according to claim 4, **characterized in that** a weight ratio of the citric acid modified chitosan to the hydroxylated vegetable oil is (0.2~5):1, and preferably (0.2∼1.5):1.

9. A method for preparing the environment-friendly molluscicide containing a ferric phosphate chelate according to any one of claims 1~8, **characterized by** comprising: placing the raw materials for preparing the environment-friendly molluscicide containing a ferric phosphate chelate into a disc granulator to produce granules, and drying the granules to obtain the environment-friendly molluscicide containing a ferric phosphate chelate.

10. Use of the environment-friendly molluscicide containing a ferric phosphate chelate according to any one of claims 1~8 in an environment selected from a terrestrial environment and an aquatic environment.

## Patentansprüche

1. Umweltfreundliches Molluskizid, enthaltend ein Eisen(III)-phosphatchelat, **dadurch gekennzeichnet, dass** Rohstoffe zum Herstellen des umweltfreundlichen Molluskizids ein Eisen(III)-phosphatchelat, einen Füllstoff und Wasser umfassen, wobei der Füllstoff Distärkephosphat umfasst.

2. Umweltfreundliches Molluskizid, enthaltend ein Eisen(III)-phosphatchelat nach Anspruch 1, **dadurch gekennzeichnet, dass** die Rohstoffe zum Herstellen des ein Eisen(III)-phosphatchelat enthaltenden umweltfreundlichen Molluskizids ferner einen Klebstoff umfassen, wobei der Klebstoff mindestens einer ausgewählt aus der Gruppe bestehend aus natürlichem Wachs, chemisch modifiziertem Wachs, Stärke, Alginat, Agar, Ligninsulfonat, Gummi arabicum und modifiziertem Chitosan umfasst, und der Klebstoff vorzugsweise das modifizierte Chitosan ist.

3. Umweltfreundliches Molluskizid, enthaltend ein Eisen(III)-phosphatchelat nach Anspruch 2, **dadurch gekennzeichnet, dass** das modifizierte Chitosan Citronensäure-modifiziertes Chitosan ist.

4. Umweltfreundliches Molluskizid, enthaltend ein Eisen(III)-phosphatchelat nach Anspruch 1, **dadurch gekennzeichnet, dass** die Rohstoffe zum Herstellen des ein Eisen(III)-phosphatchelat enthaltenden umweltfreundlichen Molluskizids ferner ein Schmiermittel umfassen, wobei das Schmiermittel mindestens eines ausgewählt aus der Gruppe bestehend aus Magnesiumstearat, Natriumlaurylsulfat, Pflanzenöl und hydroxyliertem Pflanzenöl umfasst, und das Schmiermittel vorzugsweise das hydroxylierte Pflanzenöl ist.

5. Umweltfreundliches Molluskizid, enthaltend ein Eisen(III)-phosphatchelat nach einem der Ansprüche 1-4, **dadurch gekennzeichnet, dass** das Eisen(III)-phosphatchelat durch Chelatisieren von Eisen(III)-phosphat und einem Chelatbildner gebildet wird; und ein Gewichtsverhältnis des Eisen(III)-phosphats zu dem Chelatbildner 1:(0,025~40) beträgt.

6. Umweltfreundliches Molluskizid, enthaltend ein Eisen(III)-phosphatchelat nach Anspruch 5, **dadurch gekennzeichnet, dass** das Gewichtsverhältnis von Eisen(III)-phosphat zu Chelatbildner 1:(0,2~5) und vorzugsweise 1:(0,8~1,2) beträgt.

7. Umweltfreundliches Molluskizid, enthaltend ein Eisen(III)-phosphatchelat nach Anspruch 5, **dadurch gekennzeichnet, dass** der Chelatbildner mindestens einer ausgewählt aus der Gruppe bestehend aus Glutaminsäurediessigsäure und entsprechenden Salzen davon, Iminodibernsteinsäure und entsprechenden Salzen davon, Dicarboxymethylalanin und entsprechenden Salzen davon, Ethylendiamindibernsteinsäure und entsprechenden Salzen davon und Methylglycindiessigsäure und entsprechenden Salzen davon umfasst.

8. Umweltfreundliches Molluskizid, enthaltend ein Eisen(III)-phosphatchelat nach Anspruch 4, **dadurch gekennzeichnet, dass** ein Gewichtsverhältnis des Citronensäure-modifizierten Chitosans zu dem hydroxylierten Pflanzenöl (0,2~5): 1 und vorzugsweise (0,2~1,5): 1 beträgt.

9. Verfahren zum Herstellen des umweltfreundlichen Molluskizids, das ein Eisen(III)-phosphatchelat nach einem der Ansprüche 1 bis 8 enthält, **dadurch gekennzeichnet, dass** es Folgendes umfasst: Einbringen der Rohstoffe zum Herstellen des umweltfreundlichen Molluskizids, das ein Eisen(III)-phosphatchelat enthält, in einen Scheibengranulator, um Granulat herzustellen, und Trocknen des Granulats, um das umweltfreundliche Molluskizid, das ein Eisen(III)-phosphatchelat enthält, zu erhalten.

10. Verwendung des umweltfreundlichen Molluskizids, das ein Eisen(III)-phosphatchelat nach einem der Ansprüche 1 bis 8 enthält, in einer Umgebung, die aus einer terrestrischen Umgebung und einer aquatischen Umgebung ausgewählt ist.

## Revendications

1. Molluscicide respectueux de l'environnement contenant un chélate de phosphate ferrique, **caractérisé en ce que** les matières premières pour préparer le molluscicide respectueux de l'environnement comprennent un chélate de phosphate ferrique, une charge et de l'eau, dans lequel la charge comprend du phosphate de diamidon.

2. Molluscicide respectueux de l'environnement contenant un chélate de phosphate ferrique selon la revendication 1, **caractérisé en ce que** les matières premières pour préparer le molluscicide respectueux de l'environnement contenant un chélate de phosphate ferrique comprennent en outre un adhésif, dans lequel l'adhésif comprend au moins un membre choisi dans le groupe constitué de cire naturelle, de cire chimiquement modifiée, d'amidon, d'alginate, d'agar, de lignosulfonate, de gomme arabique et de chitosane modifié, et de préférence, l'adhésif est du chitosane modifié.

3. Molluscicide respectueux de l'environnement contenant un chélate de phosphate ferrique selon la revendication 2, **caractérisé en ce que** le chitosane modifié est du chitosane modifié par l'acide citrique.

4. Molluscicide respectueux de l'environnement contenant un chélate de phosphate ferrique selon la revendication 1, **caractérisé en ce que** les matières premières pour préparer le molluscicide respectueux de l'environnement contenant un chélate de phosphate ferrique comprennent en outre un lubrifiant, dans lequel le lubrifiant comprend au moins un membre choisi dans le groupe constitué de stéarate de magnésium, de laurylsulfate de sodium, d'une huile végétale et d'une huile végétale hydroxylée, et de préférence, le lubrifiant est de l'huile végétale hydroxylée.

5. Molluscicide respectueux de l'environnement contenant un chélate de phosphate ferrique selon l'une quelconque des revendications 1 à 4, **caractérisé en ce que** le chélate de phosphate ferrique est formé en chélatant du phosphate ferrique et un agent chélateur ; et un rapport pondéral du phosphate ferrique à l'agent chélateur est de 1:(0,025 - 40).

6. Molluscicide respectueux de l'environnement contenant un chélate de phosphate ferrique selon la revendication 5, **caractérisé en ce que** le rapport pondéral du phosphate ferrique à l'agent chélateur est de 1: (0,2 - 5), et de préférence de 1 : (0,8 ~ 1,2).

7. Molluscicide respectueux de l'environnement contenant un chélate de phosphate ferrique selon la revendication 5, **caractérisé en ce que** l'agent chélateur comprend au moins un membre choisi dans le groupe constitué d'acide glutamique, d'acide diacétique et des sels correspondants de celui-ci, d'acide iminodisuccinique et des sels correspondants de celui-ci, de la dicarboxyméthylalanine et des sels correspondants de celle-ci, d'acide éthylènediamine disuccinique et des sels correspondants de celui-ci et d'acide méthylglycine diacétique et des sels correspondants de celui-ci.

8. Molluscicide respectueux de l'environnement contenant un chélate de phosphate ferrique selon la revendication 4, **caractérisé en ce qu'**un rapport pondéral du chitosane modifié par l'acide citrique à l'huile végétale hydroxylée est (0,2 - 5):1, et de préférence (0,2 - 1,5):1.

9. Procédé de préparation du molluscicide respectueux de l'environnement contenant un chélate de phosphate ferrique selon l'une quelconque des revendications 1 à 8, **caractérisé en ce qu'**il comprend : le placement des matières premières pour préparer le molluscicide respectueux de l'environnement contenant un chélate de phosphate ferrique dans un granulateur à disques pour produire des granulés, et le séchage des granules pour obtenir le molluscicide respectueux de l'environnement contenant un chélate de phosphate ferrique.

10. Utilisation du molluscicide respectueux de l'environnement contenant un chélate de phosphate ferrique selon l'une quelconque des revendications 1 à 8 dans un environnement choisi parmi un environnement terrestre et un environnement aquatique.
